Europäisches Patentamt

European Patent Office

Office européen des brevets

(11) Veröffentlichungsnummer: **0 252 998**
**A1**

(12) # EUROPÄISCHE PATENTANMELDUNG

(21) Anmeldenummer: **86109197.3**

(51) Int. Cl.⁴: **A 41 H 37/00,** F 16 P 3/04

(22) Anmeldetag: **05.07.86**

(43) Veröffentlichungstag der Anmeldung: **20.01.88**
**Patentblatt 88/3**

(71) Anmelder: **Schaeffer Scovill Verbindungstechnik GmbH,
Schützenstrasse 23, D-5600 Wuppertal 2 (DE)**

(72) Erfinder: **Birkhofer, Herbert, Dr., Inselwall 1,
D-3300 Braunschweig (DE)**

(84) Benannte Vertragsstaaten: **AT BE CH FR GB IT LI LU NL
SE**

(74) Vertreter: **Rieder, Hans-Joachim, Dr.,
Corneliusstrasse 45 Postfach 11 04 51,
D-5600 Wuppertal 11 (DE)**

(54) **Machine zum Ansetzen von Nieten, Druckknöpfen oder dergleichen.**

(57) Die Erfindung betrifft eine Maschine zum Ansetzen von Nieten, Druckknöpfen oder dergleichen, mit einem nach Auslösebetätigung auf das Unterwerkzeug (5) zu fahrenden Oberwerkzeug (6) und einer dem Oberwerkzeug zugeordneten, gleichzeitig den Fingerschutz bildenden Haltezange (45) für das Nieten- oder dergleichen Oberteil, deren Abwärtsbewegung in Richtung des Unterwerkzeuges (5) bedienungsschalter-gesteuert ist, und schlägt bei einfachem Aufbau unter weitgehender Vermeidung einer Verletzungsgefahr vor, daß die Bedienungsschalter-Steuerung eine Führungsstange (44) der Haltezange (45) aus einer Bremsstellung zum Oberwerkzeugstößel (7) freigibt zur Bewegung in Richtung auf das Unterwerkzeug (6), wobei in der unteren Endposition der Haltezange (45) der Schalter (77) für die Auslösebetätigung für das Oberwerkzeug (6) betätigt ist.

FIG. 2

18396/397
Schaeffer Scovill

ACTORUM AG

# 0252998

## Maschine zum Ansetzen von Nieten, Druckknöpfen oder dergleichen

Die Erfindung betrifft eine Maschine zum Ansetzen von Nieten, Druckknöpfen oder dergleichen, mit einem nach Auslösebetätigung auf das Unterwerkzeug zu fahrenden Oberwerkzeug und einer dem Oberwerkzeug zugeordneten, gleichzeitig den Fingerschutz bildenden Haltezange für das Nieten- oder dergleichen Oberteil, deren Abwärtsbewegung in Richtung des Unterwerkzeuges bedienungsschalter-gesteuert ist.

Eine derartige Ausgestaltung ist bekannt aus der DE-OS 2 341 258, wobei die Haltezange an einer Führungsstange sitzt, die ihrerseits über ein Hebelsystem mit einem Bowdenzug gekuppelt ist, der zum als Fußschalter ausgebildeten Bedienungsschalter führt. Wird dieser betätigt, so erfolgt über das Hebelsystem eine zwangsläufige Abwärtsbewegung der Führungsstange und damit der Haltezange in Richtung auf das Unterwerkzeug zu. Bei kräftigem Niedertreten kann zufolge der Zwangssteuerung auch ein Einklemmen der Finger erfolgen. Der weitere Nachteil dieser Ausgestaltung ist darin zu sehen, daß das Hebelsystem sehr aufwendig ist und Betriebsstörungen begünstigt.

Dem Gegenstand der Erfindung liegt die Aufgabe zugrunde, eine Maschine der vorausgesetzten Art so auszugestalten, daß neben einem vereinfachten Aufbau der zum Fingerschutz zugehörigen Teile die Haltezange stets mit gleichbleibender Kraft auf das Unterwerkzeug zu fährt.

Gelöst wird diese Aufgabe durch das Kennzeichen des Anspruchs 1.

Zufolge derartiger Ausgestaltung ist eine gattungsgemäße Maschine von vereinfachtem Aufbau angegeben, was dazu beiträgt, Herstellungskosten einzusparen. Ferner fährt die Haltezange stets mit gleichbleibender Kraft auf das Unterwerkzeug zu unabhängig von der Kraft, mit welcher der Bedienungsschalter betätigt wird. Nach Betätigen des

18 396   Dr.R./P./Rz.   3.7.1986

Bedienungsschalters wird die die Haltezange tragende Führungsstange aus ihrer Bremsstellung zur Abwärtsbewegung freigegeben, so daß ein zu einer Verletzung führendes Einklemmen von Fingern demgemäß nicht mehr auftreten kann. Erst in der unteren Endposition der Haltezange wird der Schalter für die Auslösebetätigung für das Oberwerkzeug geschaltet. Dann ist der Zugang für die Finger zwischen Unterwerkzeug und Haltezange versperrt, so daß beim Niederfahren des Oberwerkzeugstößels keine Verletzungsgefahr besteht. Zum Zurückschleppen der Haltezange in die Ausgangsstellung kann dabei die Hin- und Herbewegung des Oberwerkzeugstößels ausgenutzt werden.

Eine Variante zeichnet sich dadurch aus, einen in der unteren Position des Oberwerkzeugstößels in die Bremsstellung zur Führungsstange tretenden Bremsschuh vorzusehen. Letzterer tritt in dieser unteren Position in die Bremsstellung zur Führungsstange und schleppt sie bei der Aufwärtsbewegung mit. Ein neuer Nietvorgang kann dann erfolgen, wobei vorausgesetzt wird, daß nach der Aufwärtsbewegung des Oberwerkzeugstößels der Haltezange und auch dem Unterwerkzeug neue Nietteile zugeführt wurden.

Eine vorteilhafte Weiterbildung ist darin zu sehen, daß die Bedienungsschalter-Steuerung einen Anker eines Elektromagneten in Abwärtsrichtung verlagert, welcher die Führungsstange bis zur Freigabe der Bremsstellung schiebt. Der Bedienungsimpuls wird demgemäß auf den Elektromagneten übertragen. Dieser steuert mit stets gleichbleibender Kraft die Führungsstange aus ihrer Bremsstellung zum Bremsschuh.

Es erweist sich dabei als vorteilhaft, wenn der Anker einstellbar auf ein abgefedertes Druckstück an einem Arm der Führungsstange anliegt. Der Zeitpunkt zum Abfallen der Führungsstange mit der daran sitzenden Haltezange kann daher ganz genau bestimmt werden.

18 396   Dr.R./P./Rz.   3.7.1986

Eine weiche Betätigungsweise ergibt sich dadurch, daß der Arm der Führungsstange auf ein die Fallbewegung der Haltezange stoppendes Polster tritt. Dieses Polster führt auch zu einer schonenden Behandlung des mit den Nietteilen zu bestückenden Materiales.

Weiterhin erweist es sich dabei als günstig, daß der Arm der Führungsstange einen Einstellfinger zum Angriff an dem Schalter für die Auslösebetätigung besitzt. Das Einschalten der Stößelbewegung läßt sich auf diese Weise genau auf die Position der Haltezange in der unteren Stellung derselben bestimmen.

Damit die von dem Oberwerkzeugstößel mitgenommene Führungsstange stets in genaue Ausgangsstellung zum Bremsschuh gelangt, ist die Aufwärtsbewegung der Führungsstange von einem Einstellanschlag begrenzt, unabhängig von der Aufwärtsbewegung des Stößels. Haltezange und Oberwerkzeug nehmen in der oberen Endstellung daher stets die gleiche Position zueinander ein.

Weiterhin ist es von Vorteil, daß die Bremskraft des aus zwei Backen bestehenden Bremsschuhs einstellbar ist. Die Einstellung der Bremskraft erfolgt dabei in Abstimmung an die Kraft des Elektromagneten und an das Gewicht der Führungsstange nebst Haltezange.

Bei einer anderen Varianten erweist es sich als vorteilhaft, daß der Bremsschuh mit einer selbstschließenden Backe ausgestattet ist und die vom Oberwerkzeugstößel in Aufwärtsrichtung mitgeschleppte Führungsstange in Abwärtsstellung bis in den Bremsschuh reicht und in Aufwärtsrichtung frei durch den Bremsschuh hindurchschiebbar ist. Nach Betätigung des Bedienungsschalters und der dabei stattfindenden Bremsfreigabe fährt die Führungsstange abwärts. Sie verbleibt auch in der Abwärtsstellung noch im Bremsschuh. Hat die Haltezange ihre Sicherungsstellung eingenommen, setzt der Stößelantrieb ein, wobei der Bremsschuh in Relation zur Führungsstange verschoben wird. Ausgehend von der unteren Endstellung des Stößels nimmt dann der Bremsschuh die Führungsstange in Aufwärtsrichtung mit. Es ist dabei eine solche Bremsbackenanordnung getroffen, daß bei einer Belastung der Führungsstange in Abwärtsrichtung eine Bremskraftverstärkung eintritt. Dagegen übt eine entgegengesetzte Verlagerung der Führungsstange keine nennenswerte Bremswirkung aus. Die Steuerung der selbstschließenden Bremsbacke erfolgt dabei mittels des Auslösehebels. Letzterer ist als elektromagnetbetätigter Schwenkhebel gestaltet, so daß sich günstige Übersetzungsverhältnisse verwirklichen lassen. Die Verbindung zwischen Auslösehebel und der selbstschließenden Bremsbacke geschieht dabei über einen Schlitz/Zapfen-Eingriff. Einhergehend mit einer vom Elektromagneten veranlaßten Verschwenkung des Auslösehebels wird die Bremsbacke entgegen Federbelastung parallel zu sich selbst in die Freigabestellung gebracht, die die anschließende Abwärtsverlagerung der Führungsstange zuläßt. Mittels der beiden an der Führungsstange vorgesehenen Schaltelemente und der mit ihnen zusammenwirkenden Gegenschaltteilen läßt sich eine "Softbremsung" erzielen. Das bedeutet, daß die Haltezange kurz vor Erreichen ihrer Sicherungsstellung in ihrer Abwärtsbewegung gebremst wird dadurch, daß das obere Schaltelement den Schwenkhebel-Magnetschalter wieder in die Freigabestellung steuert, so daß dann die selbstschließende Bremsbacke in Wirkung tritt. Es wird dann nach einem kurzen Bremsweg durch das untere, mit dem unteren Gegenschaltteil zusammenwirkende Schaltelement der Stößelantrieb eingeschaltet. Vorzugsweise sind die Schaltelemente und Gegenschaltteile verstellbar angeordnet, so daß der Bremsweg einstellbar ist.

Nachstehend werden zwei Ausführungsbeispiele der Erfindung anhand der Fig. 1 bis 13 erläutert. Es zeigt

Fig. 1 in perspektivischer Darstellung eine Maschine gemäß der ersten Ausführungsform zum Ansetzen von Nieten, Druckknöpfen oder dergleichen, und zwar bei hochgefahrenem Oberwerkzeug,

Fig. 2      eine Ansicht gegen den oberen Bereich der Maschine entsprechend der Grundstellung,

Fig. 3      eine klappfigürliche Darstellung der Fig. 2,

Fig. 4      einen Vertikalschnitt im Bereich der Stößel-Teleskopführung,

Fig. 5      eine der Fig. 2 entsprechende Darstellung, wobei durch den
Elektromagneten die Führungsstange mit Haltezange zum
Abfallen freigegeben wurde,

Fig. 6      eine Detaildarstellung der Fig. 5, und zwar in etwa natürlicher Größe im Bereich des Unterwerkzeugs und der niedergefahrenen Haltezange,

Fig. 7      einen Horizontalschnitt durch den oberen Bereich der Maschine auf Höhe des Bremsschuhs, welcher das obere Ende
der Führungsstange klemmend festhält,

Fig. 8      eine der Fig. 7 entsprechende Darstellung, wobei die
Führungsstange aus der Halterung zum Klemmschuh getreten
ist,

Fig. 9      eine Ansicht gegen den oberen Bereich der Maschine gemäß
der zweiten Ausführungsform entsprechend der Grundstellung,

18 396    Dr.R./P./Rz.    3.7.1986

Fig.10 in vergrößerter Darstellung eine Draufsicht auf die Krafteinleitungs-Platte mit von dieser getragenem Bremsschuhgehäuse mit der in der Bremsstellung befindlichen, selbstschließenden Bremsbacke,

Fig.11 einen Vertikalschnitt durch den Bremsschuh gemäß der Bremsstellung, ebenfalls vergrößert dargestellt,

Fig.12 eine der Fig. 9 entsprechende Darstellung, wobei durch den Schwenkhebel-Magnetschalter die Führungsstange mit Haltezange zur Abwärtsverlagerung freigegeben wurde und

Fig.13 einen der Fig. 11 entsprechenden Schnitt, jedoch bei verschwenktem Auslösehebel.

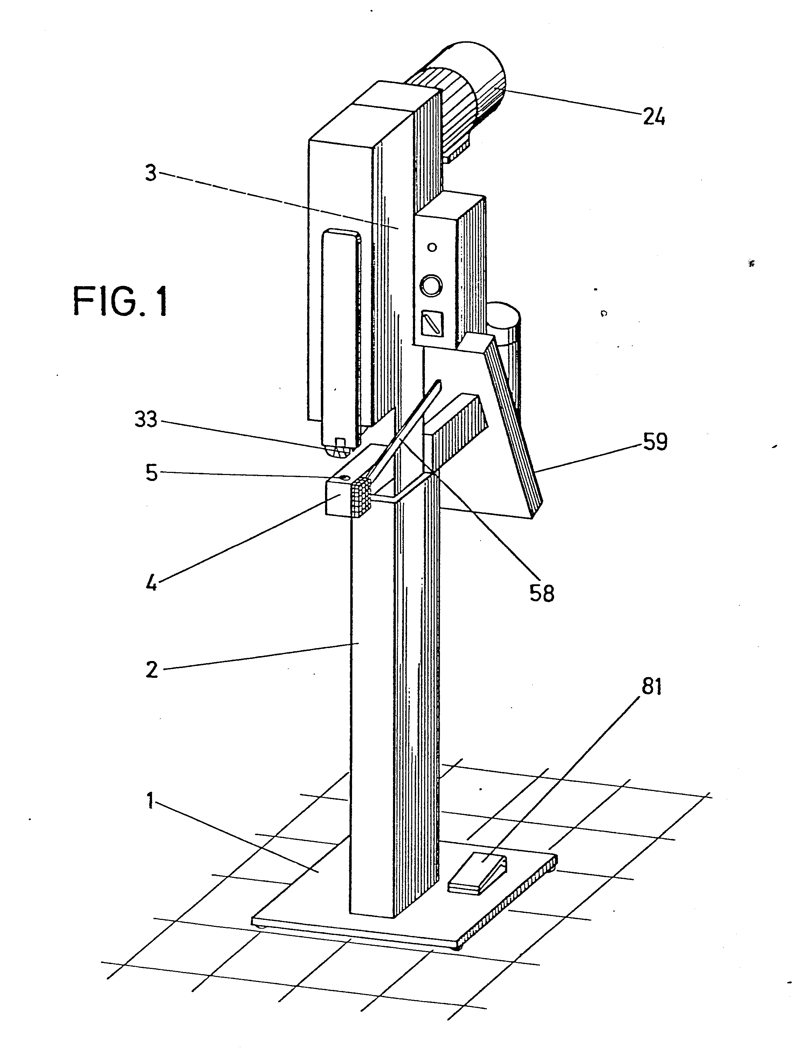

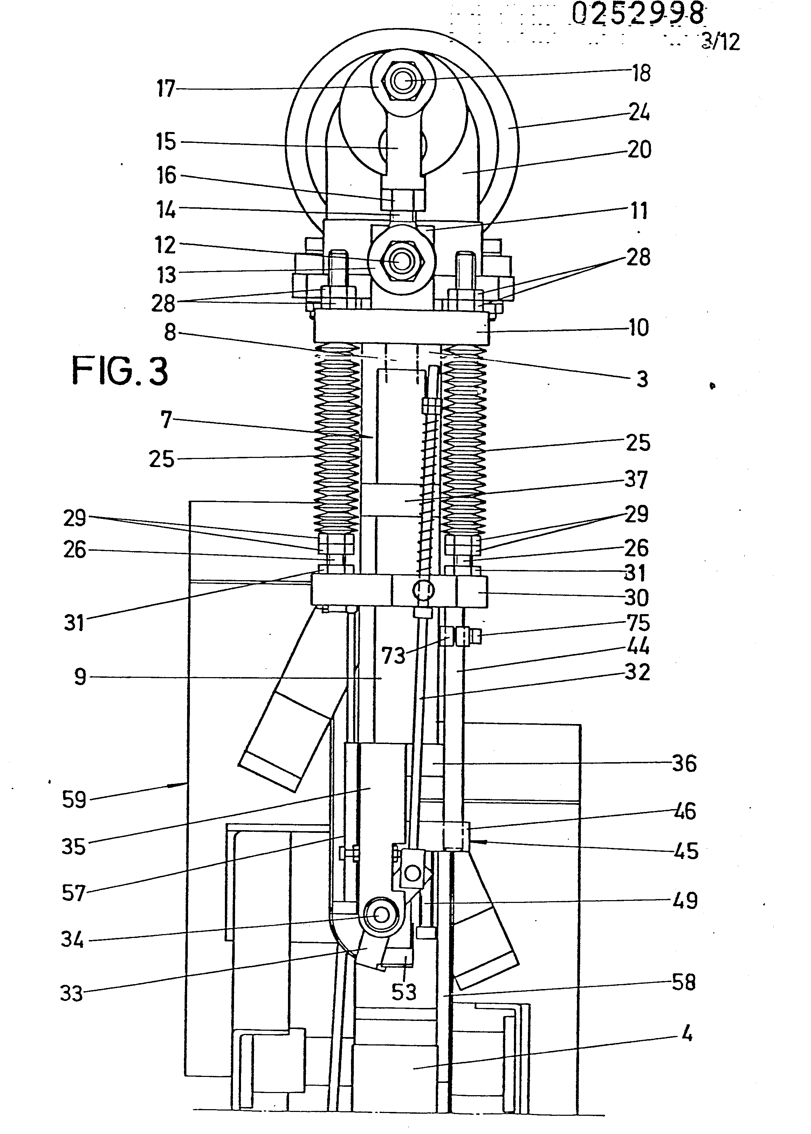

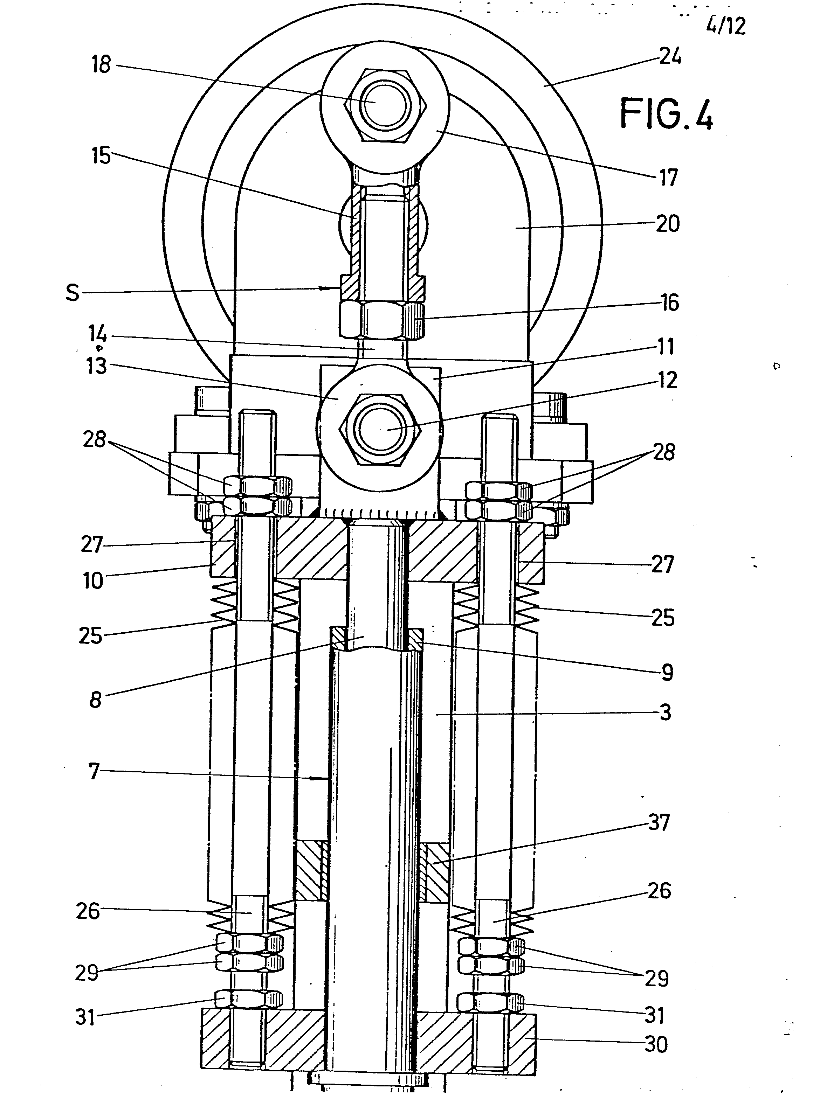

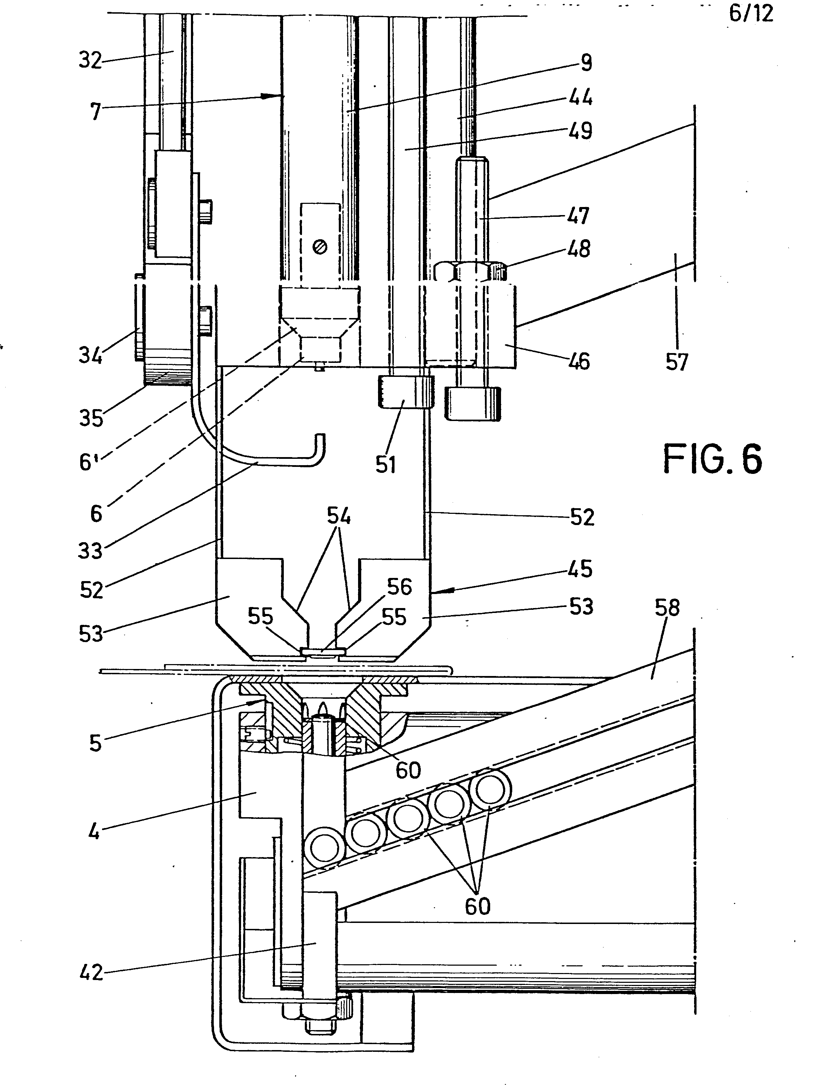

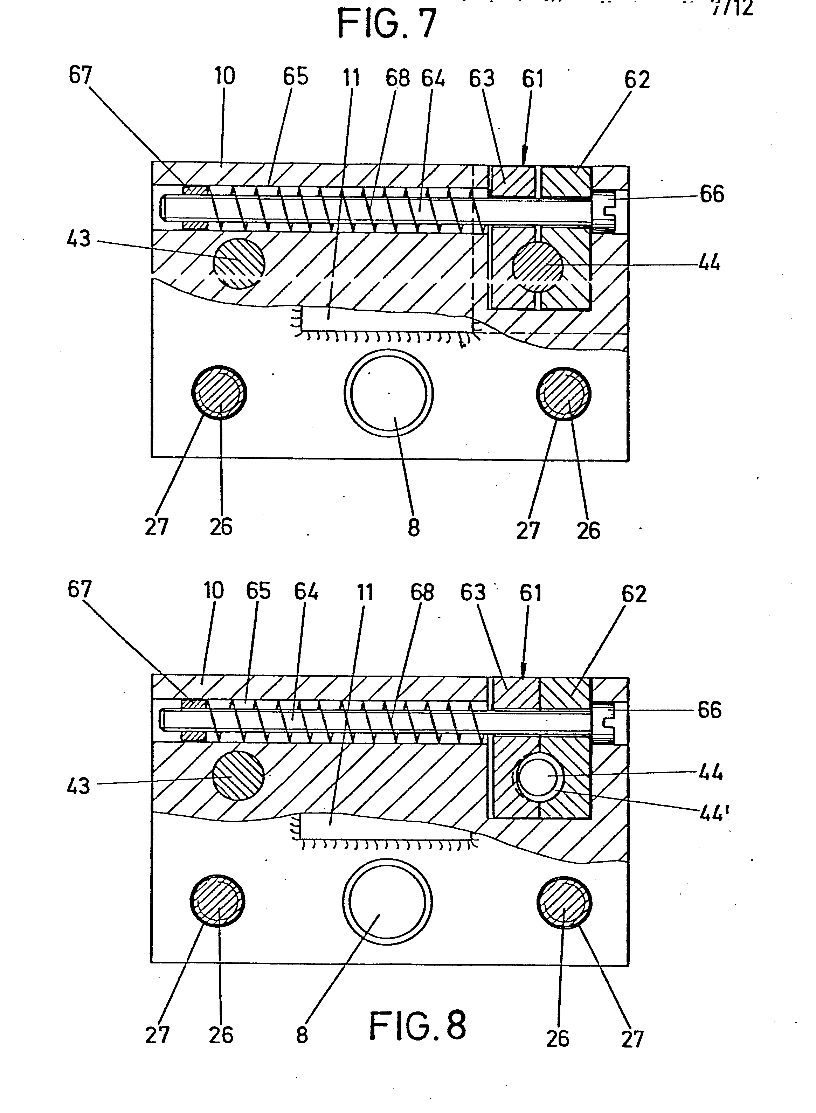

Die Maschine gemäß der ersten, in den Fig. 1-8 veranschaulichten Ausführungsform besitzt eine von einer Fußplatte 1 ausgehende Tragsäule 2. Von der oberen Stirnseite derselben geht ein Säulenkopf 3 aus. Am unteren Ende dieses Säulenkopfes ist ein Ausleger 4 zur Aufnahme eines Unterwerkzeugs 5 angebracht.

Fluchtend zum Unterwerkzeug 5 erstreckt sich oberhalb zu diesem ein Oberwerkzeug 6. Letzteres ist stirnseitig an einer Stößel-Teleskopführung 7 festgelegt, die sich aus zwei Teilen 8 und 9 zusammensetzt. Das eine Teil 8 geht zentral von einer horizontalen Krafteinleitungs-Platte 10 aus und bildet den Innendorn des zweiten, als Rohr gestalteten Teiles 9. An der Krafteinleitungs-Platte 10 sitzt aufwärts gerichtet ein Lagerböckchen 11. Dessen Lagerzapfen 12 durchgreift ein Auge 13, welches sich an einen Gewindezapfen 14 anschließt. Letzterer greift in das Innengewinde eines Kurbelarmes 15 ein und ist mittels einer Mutter 16 gegen Verdrehen gesichert. Auf diese Weise ist ein längenveränderbarer Spannschloß-Kurbelarm S geschaffen. Der Kurbelarm 15 formt ebenfalls ein Lagerauge 17, welches von einem Kurbelzapfen 18 einer Antriebs-Kurbelwelle 19 durchsetzt wird. Diese ist drehbar in zwei Lagern 20, 21 gehalten, die auf einer Stirnplatte 22 des Säulenkopfes 3 befestigt sind. Die Kurbelwelle 19 ist über eine Kupplung 23 mit einem auf der Stirnplatte 22 angeordneten Antriebmotor 24 verbunden.

Die Krafteinleitungs-Platte 10 überträgt die Stößelkraft auf das untere Teil 9 über zwei aus Tellerfedern bestehende Federpakete 25. Letztere sitzen auf zwei symmetrisch zur Stößel-Teleskopführung 7 angeordneten Stellschrauben-Dornen 26, die Bohrungen 27 der Krafteinleitungs-Platte 10 durchgreifen und an ihrem freien oberen, die Krafteinleitungs-Platte 10 überfangenden Ende zwei in Konterstellung zueinander tretende Muttern 28 tragen. Der eine Abstützungspunkt für die Federpakete 25 ist die Unterseite der Krafteinleitungs-Platte 10, während den anderen Abstützungspunkt zwei auf den Stellschrauben-Dornen 26 angeordnete, ebenfalls in Konterstellung zueinander tretende Muttern 29 bilden. Dieselben erstrecken sich in Nachbarschaft einer Stößelplatte 30, in welche die Stellschrauben-Dorne 26 eingeschraubt und mittels einer Mutter 31 fixiert sind. Durch Verdrehen der Muttern 29 kann der Federdruck der Federpakete variiert werden. Die anderen sich an der Krafteinleitungs-Platte 10 abstützenden Muttern 28 dagegen gestatten durch Verstellung eine Abstandsveränderung des Oberwerkzeugs 6 relativ zum Unterwerkzeug 5 verbunden mit einer gleichzeitigen Federdruck-Änderung. Ferner können nach Lösen der Muttern 31 mittels der gekonterten Muttern 28 die Stellschrauben-Dorne 26 so verdreht werden, daß ausschließlich eine Höhenveränderung der Stößelplatte 30 und damit des Oberwerkzeugstößels auftritt. Sodann kann eine Grob-Abstandsverstellung dadurch vorgenommen werden, daß der Gewindezapfen 14 in den Kurbelarm 15 mehr oder weniger weit eingeschraubt wird. Auch hierbei verändert sich der Federdruck der Federpakete 25 nicht.

18 396   Dr.R./P./Rz.   3.7.1986

8

Die mit dem unteren, rohrförmigen Teil 9 der Stößel-Teleskopführung 7 fest verbundene Stößelplatte 30 steuert über eine abgefederte Stange 32 einen schwingenartigen Einschubhebel 33, welcher dem Oberwerkzeug 6 zugeordnet ist. Der Einschubhebel 33 lagert um einen Zapfen 34, der endseitig einen Haltearm 35 einer Lagerplatte 36 durchsetzt. Oberhalb dieser Lagerplatte 36 erstreckt sich in paralleler Anordnung eine weitere Lagerplatte 37, welche beiden Platten Gleitführungen für das rohrförmige Teil 9 der Stößel-Teleskopführungen 7 bilden und fest mit dem Säulenkopf 3 verbunden sind. Beide Lagerplatten 36, 37 tragen ferner zwischen sich ein Knotenblech 38, welches um einen Drehzapfen 39 einen doppelarmigen Steuerhebel 40 lagert, von dem eine Mitnehmerstange 41 zum Ausleger 4 führt und dort in nicht dargestellter Weise einen schwenkbaren Einlegefinger 42 steuert. Verlagert wird der Steuerhebel 40 durch das untere freie Stirnende einer Stange 43, die von der Krafteinleitungs-Platte 10 abwärts gerichtet ausgeht.

In paralleler Anordnung zur Stange 43 erstreckt sich eine Führungsstange 44. Letztere trägt am unteren Ende eine Haltezange 45. Im einzelnen besitzt die Haltezange 45 eine Tragplatte 46, in welcher das untere Ende des Teiles 9 der Stößel-Teleskopführung 7 verschieblich geführt ist. Die Tragplatte 46 ist fest mit der Führungsstange 44 verbunden.

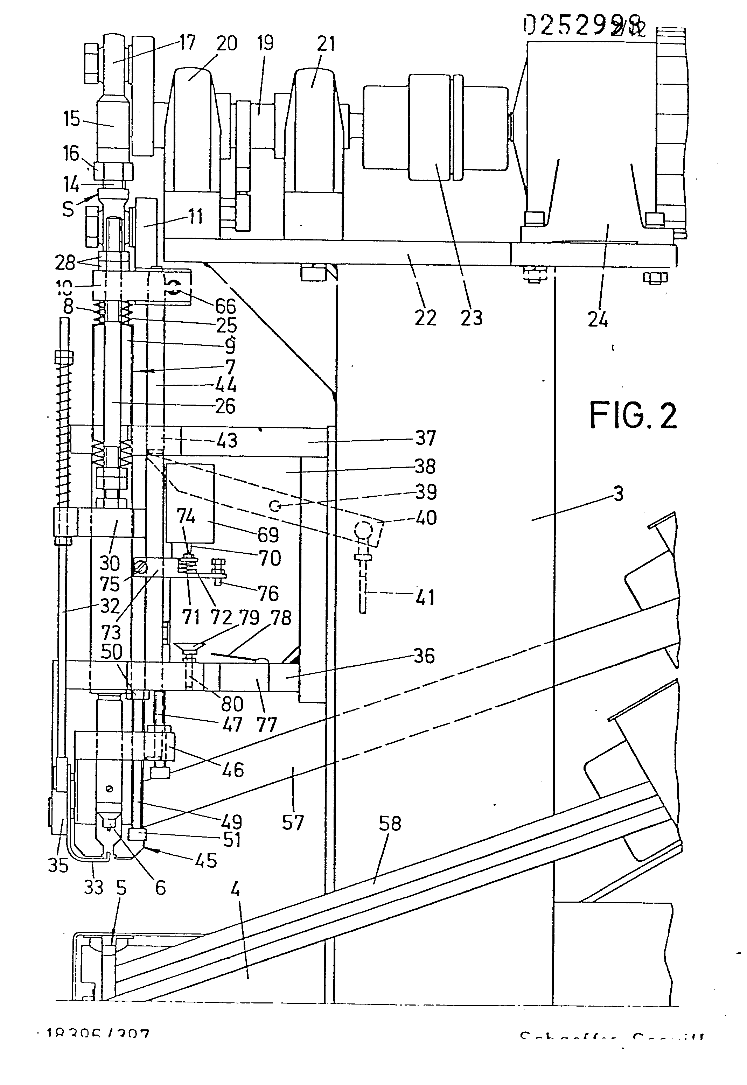

Bestandteil der Tragplatte 46 ist ein Einstellanschlag 47, welcher die Aufwärtsbewegung der Führungsstange 44 begrenzt. Der Einstellanschlag 47 ist als Schraube ausgebildet, welche eine Gewindebohrung der Tragplatte 46 durchsetzt und dort mittels einer Mutter 48 gegen Verdrehen gesichert ist. In der oberen Stellung der Führungsstange 44 bzw. der Haltezange 45 beaufschlagt die Schraube mit ihrem Stirnende die Unterseite der Lagerplatte 36, vergl. Fig. 2.

In paralleler Anordnung zur den Einstellanschlag 47 bildenden Schraube geht von der Lagerplatte 36 eine Einstellschraube 49 aus.

Letztere durchsetzt frei die Tragplatte 46. Zur Undrehbarkeit der Einstellschraube 49 dient eine Mutter 50. Der Schraubenkopf 51 der Einstellschraube wirkt zusammen mit der Unterseite der Tragplatte 46.

Die Haltezange 45 trägt an abwärts gerichteten Blattfederabschnitten 52 Zangenbacken 53, welche innenseitig Steuerschrägen 54 formen, die mit der Kegelstumpffläche 6' des Oberwerkzeugs 6 zusammenwirken. Den Steuerschrägen 54 nachgeordnet sind Aufnahmenischen 55 für ein Nietoberteil 56. Das Einlegen der Nietoberteile 56 in die Aufnahmenischen 55 erfolgt durch den Einschubhebel 33.

Die Nietoberteile 56 werden über eine Zuführungsschiene 57 zugebracht, welche in paralleler Erstreckung zu einer Zuführungsschiene 58 verläuft. Beide Zuführungsschienen 57, 58 sind geneigt ausgerichtet und gehen von einem Magazin 59 aus, von welchem das geordnete Zuführen der Nietoberteile 56 und der Nietunterteile 60 erfolgt.

Das obere Ende 44' der Führungsstange 44 läuft konisch zu und ist von einem Klemmschuh 61 gehalten. Letzterer sitzt seitwärts ausladend in der Krafteinleitungs-Platte 10 und setzt sich aus zwei Backen 62 und 63 zusammen. Die eine Backe 62 ist fest der Krafteinleitungs-Platte 10 zugeordnet, während die andere Backe 63 quer zur Längsrichtung der Führungsstange 44 verlagerbar ist. Beide Backen 62, 63 werden von einer quergerichteten Stellschraube 64 durchsetzt, welche in einer durchgehenden Bohrung 65 der Platte 10 angeordnet ist und die sich mit ihrem Kopf 66 an der festen Backe 62 abstützt. Das freie Ende der Stellschraube 64 durchgreift eine Mutter 67. Zwischen dieser und der verstellbaren Bremsbacke 63 sitzt eine Druckfeder 68. Durch Verdrehen der Stellschraube 64 kann die Vorspannung der Druckfeder 68 verändert werden, so daß die Bremsbacke 63 mit mehr oder weniger Kraft auf die Führungsstange 44 wirkt. Die Bremskraft ist so bemessen, daß die Führungsstange 44 mit der daran sitzenden Haltezange 45 nicht ungewollt aus der Bremsstellung zum Oberwerkzeugstößel tritt.

18 396   Dr.R./P./Rz.   3.7.1986

Zur Verlagerung der Führungsstange 44 dient ein am Knotenblech 38 befestigter Elektromagnet 69. Dessen Anker 70 wirkt auf ein Druckstück 71, welches über eine Druckfeder 72 gegenüber einem Arm 73 der Führungsstange 44 abgefedert ist. Dem Druckstück 71 ist eine Einstellschraube 74 zugeordnet zwecks Anpassung an die Lage des Ankers 70. Ferner kann eine Höhenverstellung des Armes 73 relativ zur Führungsstange 44 mittels einer Klemmschraube 75 erfolgen.

Das freie Ende des Armes 73 trägt einen Einstellfinger 76 zum Angriff an dem Schalter 77 für die Einschaltung des Stößel-Antriebs 24. Der Einstellfinger 76 ist ebenfalls als Schraube ausgebildet und beaufschlagt mit seinem unteren Ende das Schaltglied 78 des Schalters 77. Der Schalter 77 sitzt dabei an der Lagerplatte 36. Diese nimmt ferner ein Polster 79 auf, welches an einer höhenverstellbaren Schraube 80 angebracht ist.

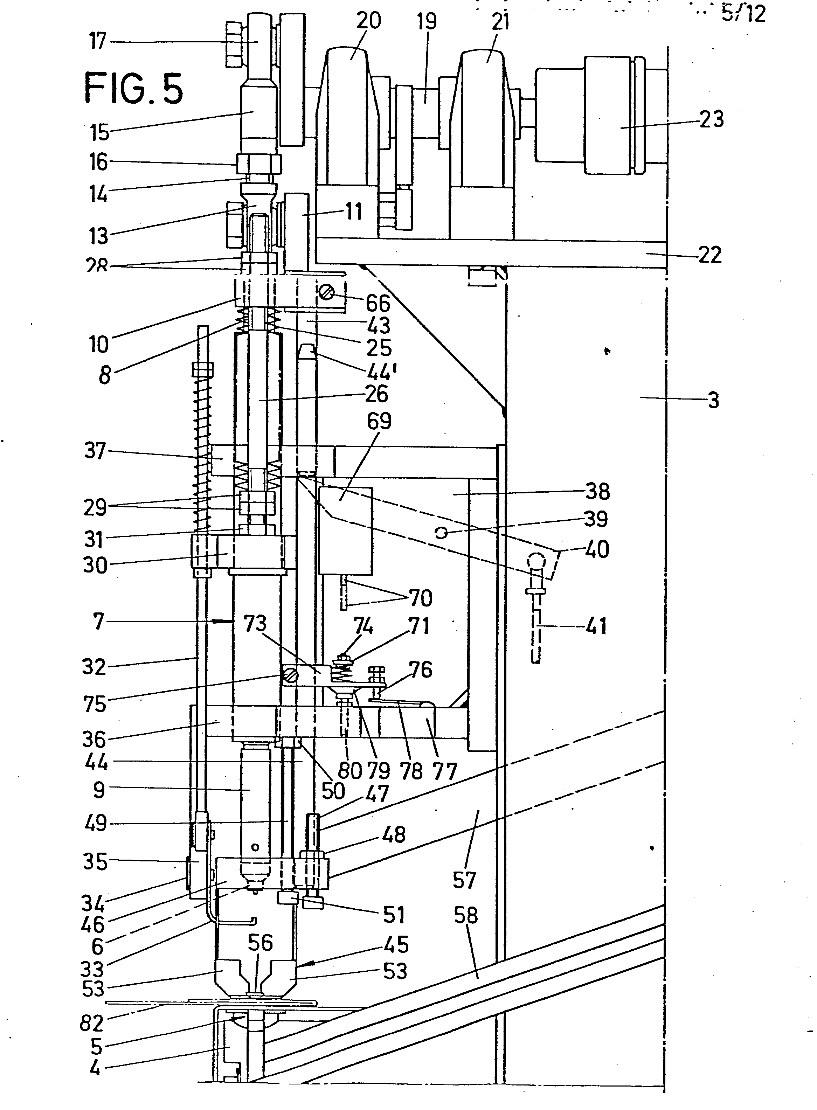

Es ergibt sich folgende Wirkungsweise: Sind das Unterwerkzeug 5 und Zangenbacken 53 ordnungsgemäß mit den Nietteilen 56 bzw. 60 beladen worden, kann der Nietvorgang mittels eines Fußschalters 81 eingeleitet werden. Bei der Betätigung des Fußschalters 81 erhält der Elektromagnet 69 einen Impuls, wobei dessen Anker 70 in die strichpunktierte Lage gemäß Fig. 5 abwärts fährt. Hierbei wird über das Druckstück 71 der Arm 73 beaufschlagt, so daß die Führungsstange 44 mit der daran sitzenden Haltezange 45 in Abwärtsrichtung mitgeschleppt wird. Dabei gelangt das obere Ende der Führungsstange 44 aus der Bremsstellung zum Bremsschuh 61 und kann abfallen. In der Endphase dieses Abfallens beaufschlagt der Arm 73 das Polster 79, vergl. Fig. 5, so daß dann die Haltezange 45 in einem geringen Abstand zum das Unterwerkzeug 5 aufnehmenden Ausleger 4 liegt. Dieser Abstand entspricht den Sicherungsvorschriften und gestattet nicht das Einführen eines sogenannten Prüffingers. Gleichzeitig hat in dieser unteren Stellung der Haltezange 45 der Einstellfinger 76 des Armes 73 das Schaltglied 78 des Schalters 77 verlagert, wodurch der Antriebs-

18 396   Dr.R./P./Rz.   3.7.1986

motor 24 einen Impuls erhält und die Kurbelwelle 19 dreht, verbunden mit einer Abwärtsbewegung der Stößel-Teleskopführung 7. Hierbei beaufschlagt das Oberwerkzeug 6 mit seiner kegelstumpfförmigen Flanke 6' die Steuerschrägen 54 der Zangenbacken 53 und spreizt diese auseinander. Dann ist jedoch das Nietoberteil 56 bereits vom Oberwerkzeug 6 erfaßt und kann mit dem Nietunterteil 60 verbunden werden, indem diese beiden Teile bspw. einem strichpunktiert in Fig. 5 veranschaulichten Bekleidungsstück 82 zugeordnet werden. Begrenzt wird die Abwärtsbewegung der Haltezange dabei durch den Schraubenkopf 51 der Einstellschraube 49. Die auf die Nietteile 56, 60 einwirkende Schließkraft ist dabei auf die entsprechenden Gegebenheiten einstellbar.

Während dieser Abwärtsbewegung ist gleichzeitig die Krafteinleitungs-Platte 10 verlagert worden und damit der Klemmschuh 61. Letzterer überfährt dabei das konische Ende 44' der Führungsstange 44 und tritt in Bremsstellung zu dieser, so daß beim anschließenden Aufwärtshub des Oberwerkzeugstößels 7 die Führungsstange 44 einschließlich Haltezange 45 mitgenommen wird. Die Aufwärtsbewegung der Führungsstange 44 wird begrenzt von dem Einstellanschlag 47, der gegen die Unterseite der Lagerplatte 36 tritt. Dann liegt die Ausgangsstellung wieder vor, wobei in der Endphase dieses Bewegungsablaufes den Zangenbacken 53 und Unterwerkzeug 5 Nietteile zugeliefert wurden durch den Einschubhebel 33 bzw. Einlegefinger 42. Auch der Elektromagnet 69 mit seinem Anker 70 befindet sich dann in der Grundstellung, so daß der neue Nietvorgang erfolgen kann.

Der Steuerhebel 40 und Stange 32 werden nur in einer Richtung zwangsläufig mitgenommen. Sie lassen daher eine Handbetätigung zu, um ohne Stößelbewegung Nietteile einlegen zu können.

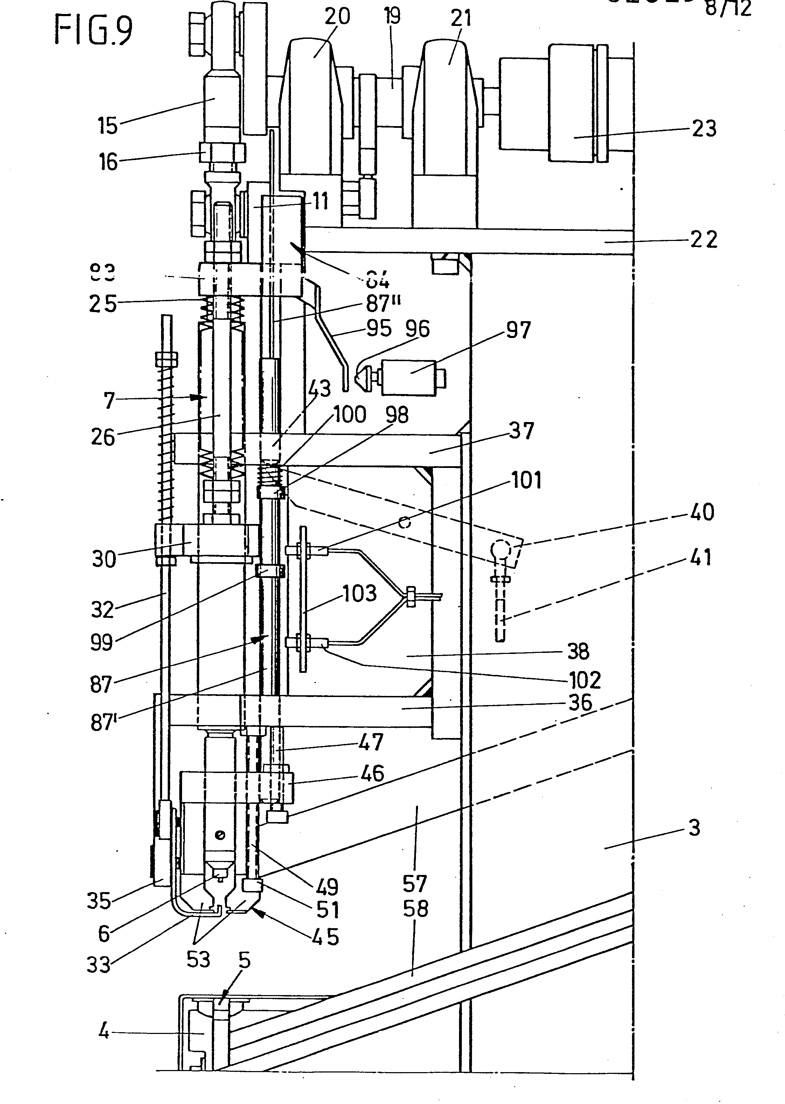

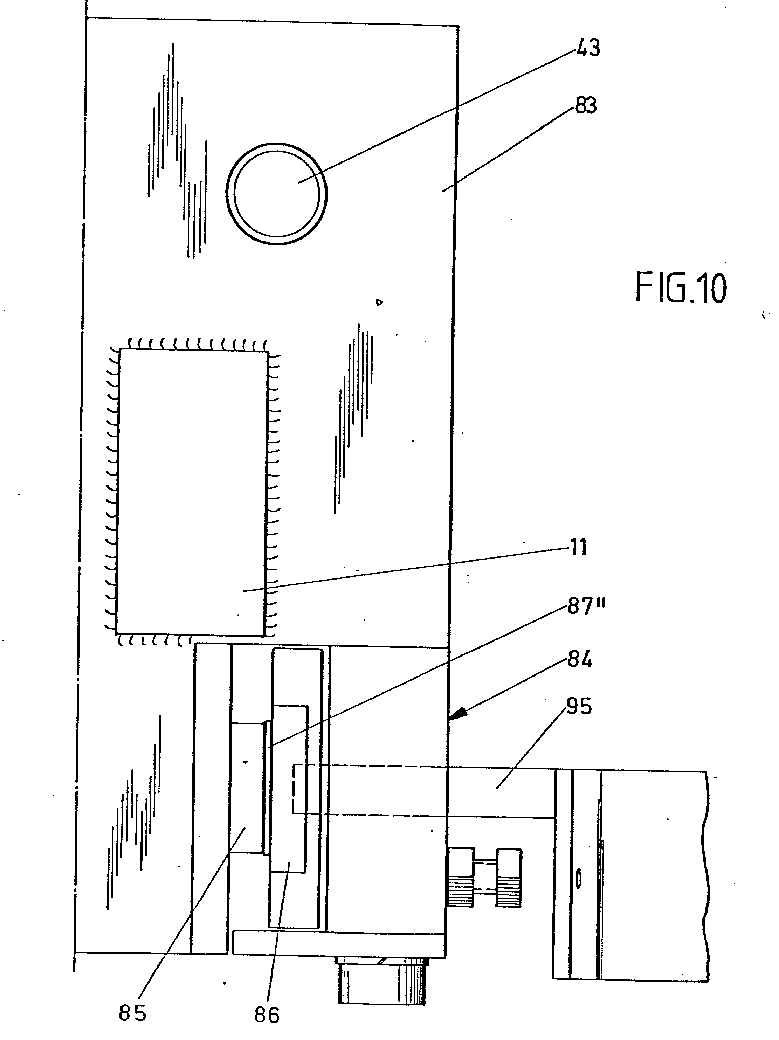

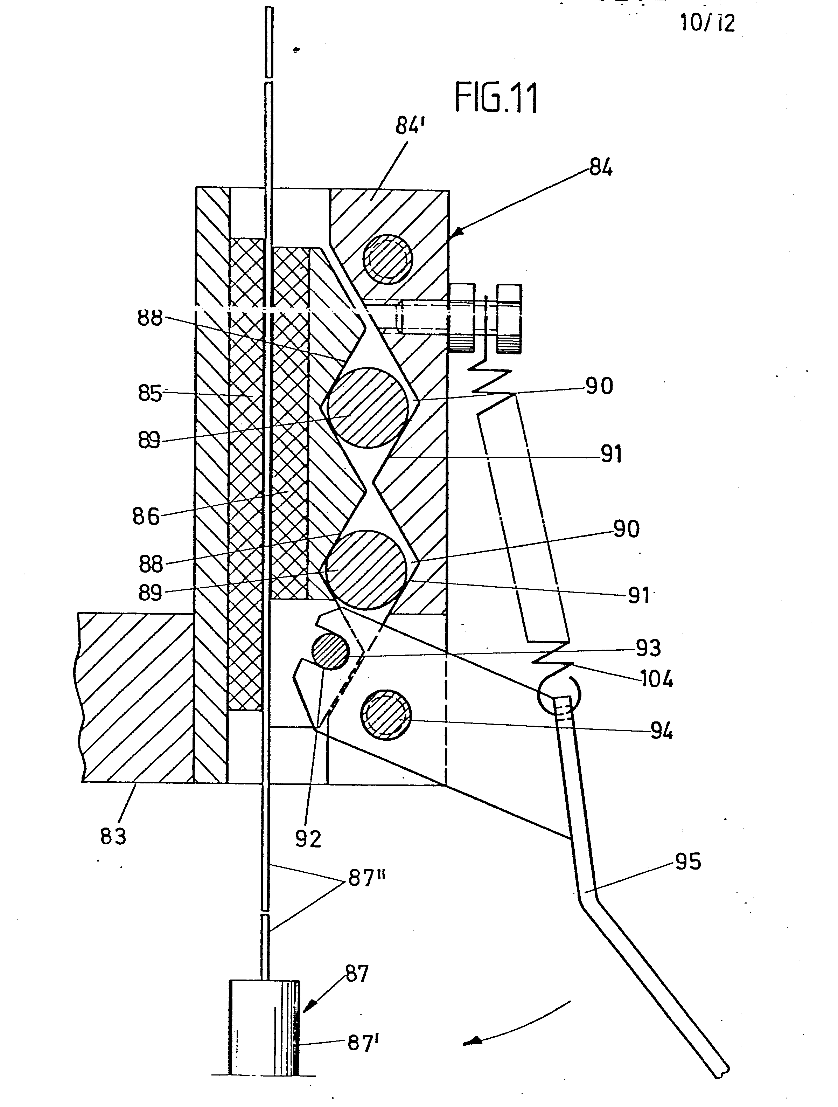

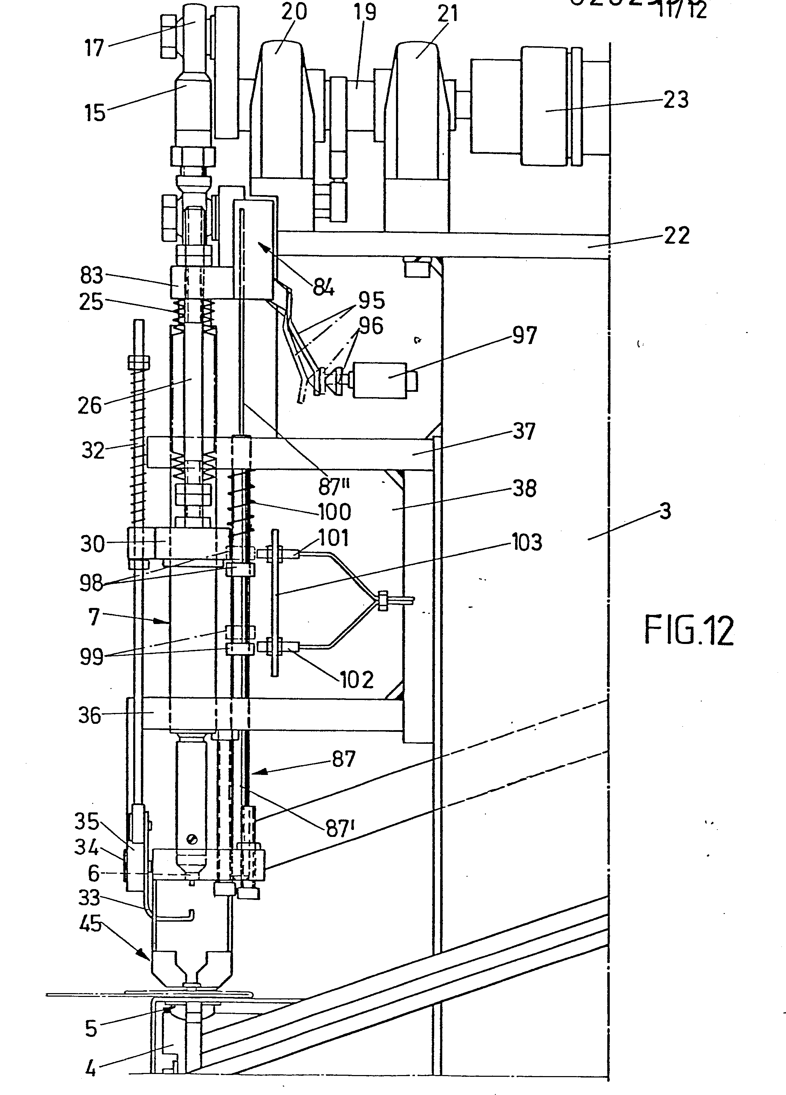

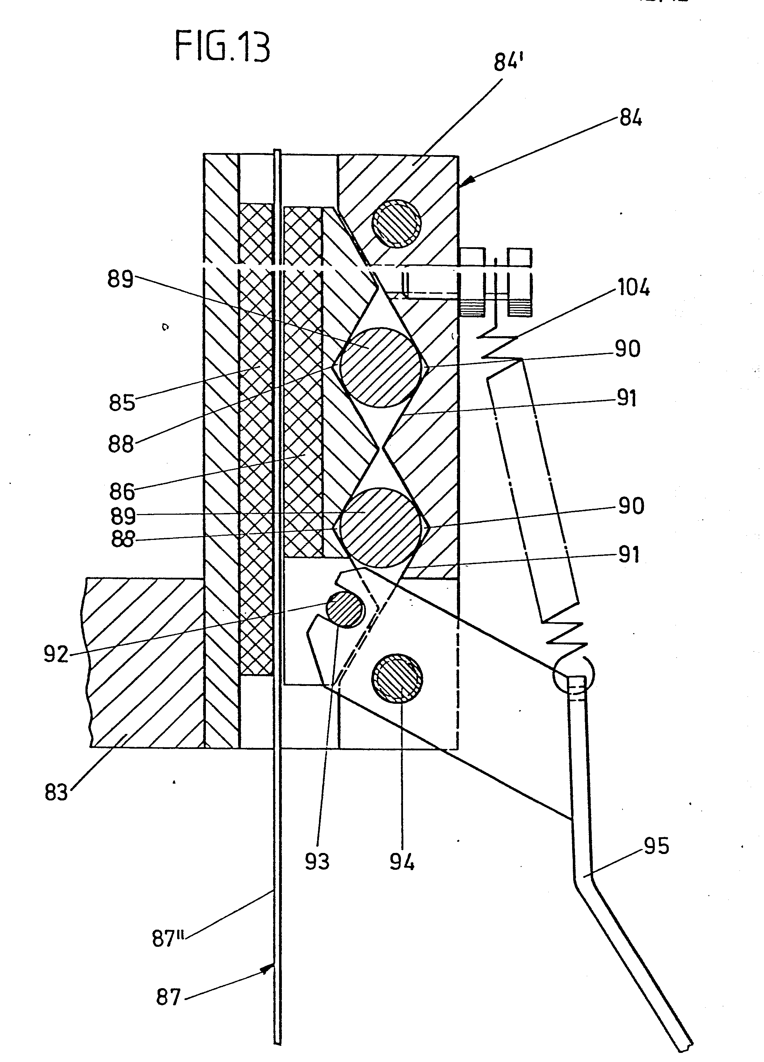

Bei der zweiten, in den Fig. 9-13 veranschaulichten Ausführungsform tragen gleiche Bauteile gleiche Bezugsziffern. Die Krafteinleitungs-

18 396    Dr.R./P./Rz.    3.7.1986

platte 83 trägt einen Bremsschuh 84. Dessen Gehäuse 84' beinhaltet eine feste, vertikal ausgerichtete Bremsbacke 85, welcher eine selbstschließende Bremsbacke 86 gegenüberliegt. Zwischen den Bremsbacken 85, 86 läuft die Führungsstange 87 hindurch. Letztere setzt sich aus einem unteren rohrförmigen Abschnitt 87' und einem oberen, mit diesem unteren Abschnitt 87' verbundenen Flachstahlabschnitt 87'' zusammen derart, daß dieser zwischen den Bremsbacken 85, 86 hindurchgeführt ist. Der rohrförmige Abschnitt 87' trägt die Haltezange 45.

Rückseitig formt die selbstschließende Bremsbacke 86 zwei keilartige Vertiefungen 88, in welchen je ein Rollkörper 89 einliegt. Den Vertiefungen 88 liegen ebenfalls keilförmige Vertiefungen 90 gegenüber. Letztere bilden schräg in Richtung der festen Bremsbacke abfallende Keilschrägen 91 aus, an welchen sich die Rollkörper 89 abstützen. Das untere Ende der selbstschließenden Bremsbacke 86 ist gegabelt gestaltet und wird in diesem gegabelten Bereich von einem Zapfen 92 durchsetzt. Dieser greift in einen einseitig offenen Schlitz 93 eines um einen Gelenkzapfen des Bremsschuhgehäuses 84' gelagerten Auslösehebels 95. Eine Zugfeder 104 greift am Auslösehebel 95 an und belastet diesen entgegen Uhrzeigerrichtung, wodurch die selbstschließende Bremsbacke zufolge der Rollkörper 89 und Keilschrägen 91 in die Bremsanlagestellung zum Flachstahlabschnitt 87'' gezwungen wird. Auf diese Weise wird die Führungsstange 87 in ihrer Stellung gehalten. An der Führungsstange 87 in Abwärtsrichtung wirkende Belastungen führen zu einer Vergrößerung der Bremskraft.

Das untere Ende des als Schwenkhebel ausgebildeten Auslösehebels 95 erstreckt sich vor dem Anker 96 eines Elektromagneten 97.

Die Führungsstange 87 trägt unterhalb der oberen Lagerplatte 37 zwei mit Abstand übereinander angeordnete Schaltelemente 98, 99. Letztere sind als Stellringe ausgebildet und in ihrer Höhenlage einstellbar. Zwischen dem oberen Schaltelement 98 und der Lagerplatte 37 erstreckt

18 396    Dr.R./P./Rz.    3.7.1986

element 99 dem unteren Gegenschaltteil 102 gegenüberliegt. Hierdurch erhält der Antriebsmotor 24 den Impuls und dreht die Kurbelwelle 19 verbunden mit einer Abwärtsbewegung der Stößel-Teleskopführung 7. Während der Abwärtsbewegung wird die Krafteinleitungs-Platte 83 mitgenommen. Zufolge der besonderen Ausgestaltung der selbstschließenden Bremsbacke 86 wird dabei keine nennenswerte Bremskraft ausgeübt, so daß eine Relativverschiebung zwischen Bremsschuh und Führungsstange möglich ist. Beim anschließenden Aufwärtshub des Oberwerkzeugstößels 7 erfolgt dann jedoch wiederum eine Mitnahme der Führungsstange 87 mit Haltezange 45, welche Aufwärtsbewegung der Führungsstange 44 durch den Einstellanschlag 47 begrenzt wird. Während dieses Aufwärtshubes kann über einen nicht dargestellten induktiven Grenztaster der Antrieb ausgeschaltet und die diesem zugeordnete Bremse eingeschaltet werden. Es liegt dann erneut die Ausgangsstellung vor.

Alle in der Beschreibung erwähnten und in der Zeichnung dargestellten neuen Merkmale sind erfindungswesentlich, auch soweit sie in den Ansprüchen nicht ausdrücklich beansprucht sind.

Patentansprüche

1. Maschine zum Ansetzen von Nieten, Druckknöpfen oder dergleichen, mit einem nach Auslösebetätigung auf das Unterwerkzeug zu fahrenden Oberwerkzeug und einer dem Oberwerkzeug zugeordneten, gleichzeitig den Fingerschutz bildenden Haltezange für das Nieten- oder dergleichen Oberteil, deren Abwärtsbewegung in Richtung des Unterwerkzeuges bedienungsschalter-gesteuert ist, dadurch gekennzeichnet, daß die Bediedienungsschalter-Steuerung eine Führungsstange (44, 87) der Haltezange (45) aus einer Bremsstellung zum Oberwerkzeugstößel (7) freigibt zur Bewegung in Richtung auf das Unterwerkzeug (6), wobei in der unteren Endposition der Haltezange (45) der Schalter (77, 102) für die Auslösebetätigung für das Oberwerkzeug (6) betätigt ist.

2. Maschine nach Anspruch 1, gekennzeichnet durch einen in der unteren Position des Oberwerkzeugstößels (7) in die Bremsstellung zur Führungsstange (44) tretenden Bremsschuh (61).

3. Maschine nach einem oder mehreren der vorhergehenden Ansprüche, dadurch gekennzeichnet, daß die Bedienungsschalter-Steuerung einen Anker (70) eines Elektromagneten (69) in Abwärtsrichtung verlagert, welcher die Führungsstange (44) bis zur Freigabe der Bremsstellung schiebt.

4. Maschine nach einem oder mehreren der vorhergehenden Ansprüche, dadurch gekennzeichnet, daß der Anker (70) einstellbar auf ein abgefedertes Druckstück (71) an einem Arm (73) der Führungsstange (44) aufliegt.

5. Maschine nach einem oder mehreren der vorhergehenden Ansprüche, dadurch gekennzeichnet, daß der Arm (73) der Führungsstange (44) auf ein die Fallbewegung der Haltezange (45) stoppendes Polster (79) tritt.

18 396    Dr.R./P./Rz.    3.7.1986

6. Maschine nach einem oder mehreren der vorhergehenden Ansprüche, dadurch gekennzeichnet, daß der Arm (73) der Führungsstange (44) einen Einstellfinger (76) zum Angriff an dem Schalter (77) für die Auslösebetätigung besitzt.

7. Maschine nach einem oder mehreren der vorhergehenden Ansprüche, dadurch gekennzeichnet, daß die Aufwärtsbewegung der Führungsstange (44) von einem Einstellanschlag (47) begrenzt ist, unabhängig von der Aufwärtsbewegung des Stößels (7).

8. Maschine nach einem oder mehreren der vorhergehenden Ansprüche, dadurch gekennzeichnet, daß die Bremskraft des aus zwei Backen (62, 63) bestehenden Bremsschuhs (61) einstellbar ist.

9. Maschine nach einem oder mehreren der vorhergehenden Ansprüche, dadurch gekennzeichnet, daß der Bremsschuh (84) mit einer selbstschließenden Bremsbacke (86) ausgestattet ist und die vom Oberwerkzeugstößel (7) in Aufwärtsrichtung mitgeschleppte Führungsstange (87) in Abwärtsstellung bis in den Bremsschuh reicht und in Aufwärtsrichtung frei durch den Bremsschuh hindurchschiebbar ist.

10. Maschine nach einem oder mehreren der vorhergehenden Ansprüche, dadurch gekennzeichnet, daß die selbstschließende Bremsbacke (86) sich über Keilschrägen (91) am Bremsschuhgehäuse (84') abstützt derart, daß in Abwärtsrichtung weisende Belastungen die Bremsbacke (86) in Richtung der Bremsstellung verlagern.

11. Maschine nach einem oder mehreren der vorhergehenden Ansprüche, dadurch gekennzeichnet, daß die selbstschließende Bremsbacke (86) mittels eines Auslösehebels (95) in die Freigabestellung steuerbar ist.

12. Maschine nach einem oder mehreren der vorhergehenden Ansprüche, dadurch gekennzeichnet, daß der Auslösehebel (95) als elektromagnetbetätigter Schwenkhebel gestaltet ist, der in Schlitz/ Zapfen-Eingriff zu der zu sich selbst parallel geführten Bremsbacke (86) steht.

13. Maschine nach einem oder mehreren der vorhergehenden Ansprüche, dadurch gekennzeichnet, daß die Führungsstange (87) mit zwei Schaltelementen (98, 99) ausgestattet ist, die in Abwärtsstellung in Schalt/ Wirkungsstellung liegen zu maschinenfesten Gegenschaltteilen (101, 102), von denen das obere (101) den Schwenkhebel-Elektromagneten (97) wieder in die Freigabestellung steuert.

18 396    Dr.R./P./Rz.    3.7.1986

**FIG.1**

FIG. 2

0252998

18306/307

FIG. 3

0252998

4/12

FIG.4

FIG.5

0252998
5/12

FIG.6

## FIG.7

## FIG.8

FIG.9

FIG.10

0252998 9/12

18396/307

FIG.11

FIG.12

FIG.13

Europäisches Patentamt

**EUROPÄISCHER RECHERCHENBERICHT**

0252998
Nummer der Anmeldung

EP 86 10 9197

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 313 351 (WILLIAM PRYM-WERKE) * Seite 8, Zeilen 7-34; Seite 9, Zeilen 24-34; Seiten 10,11; Seite 12, Zeilen 1-21; Seiten 13-16; Figuren * | 1 | A 41 H 37/00 F 16 P 3/04 |
| A | EP-A-0 147 861 (NIPPON NOTION KOGYO CO. LTD.) * Seiten 14-16; Seite 17, Zeilen 1-10; Figuren * | 1 | |
| A | GB-A-2 015 110 (WILLIAM PRYM-WERKE) * Seite 1, Zeilen 115-129; Seiten 2,3; Figuren * | 1 | |
| E | DE-A-3 519 873 (SCHAEFFER SCOVILL) * Insgesamt * | 1-13 | RECHERCHIERTE SACHGEBIETE (Int. Cl.4) A 41 H F 16 P |
| A,D | DE-A-2 341 258 (SCHAEFFER-HOMBERG GmbH) | | |
| A | GB-A-1 016 006 (J.P. UDAL LTD.) | | |

Der vorliegende Recherchenbericht wurde für alle Patentansprüche erstellt.

| Recherchenort | Abschlußdatum der Recherche | Prüfer |
|---|---|---|
| DEN HAAG | 09-03-1987 | GARNIER F.M.A.C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82